# EUROPEAN PATENT APPLICATION

(11) **EP 2 395 715 A1**
(43) Date of publication of application: **14.12.2011**
(21) Application number: 10748333.1
(22) Date of filing: 03.03.2010
(51) Int. Cl.: H04L 12/56

(54) **METHOD, DEVICE AND SYSTEM THEREOF FOR MIGRATING VRF**

(30) Priority: 04.03.2009 CN 200910037581
(71) Applicant: Huawei Technologies Co., Ltd., Shenzhen, Guangdong 518129 (CN)
(72) Inventor: TU, Boyan, Shenzhen Guangdong 518129 (CN); ZHANG, Lixin, Shenzhen Guangdong 518129 (CN); CHEN, Shuanglong, Shenzhen Guangdong 518129 (CN); LIU, Jianwen, Shenzhen Guangdong 518129 (CN); XU, Jianbin, Shenzhen Guangdong 518129 (CN); LIU, Xiaohui, Shenzhen Guangdong 518129 (CN)
(74) Representative: Thun, Clemens
(86) International application number: PCT/CN2010/070839
(87) International publication number: WO 2010/099743

(57) **Abstract**

A method, an apparatus and a system for migrating VPN Routing and Forwarding (VRF) instances are disclosed. The system includes: a first BGP process, configured to: send a VRF instance and configuration information of BGP peers in the VRF instance to a second Border Gateway Protocol (BGP) process; instruct a Transport Control Protocol (TCP) to back up a TCP link to the second BGP process in a hot backup mode, where the TCP link is related to peer sessions of the BGP peers in the VRF instance; and the second BGP process, configured to: create a virtual VRF instance and virtual BGP peers for storing the configuration information; receive the TCP link that is backed up by the TCP in a hot backup mode and related to the peer sessions of the BGP peers in the VRF instance; and receive routes in an Adjacent Ingress Routing Information Base (Adj-RIB-IN) sent by the first BGP process unit, where the Adj-RIB-IN is corresponding to the BGP peers in the VRF instance. In the embodiments of the present invention, in the process of dynamic migration of the a VRF instance between BGP processes, BGP peers services of the VRF instance are not interrupted, and the sessions are not disconnected; a peer device cannot perceive the migration process of a router completely; and changed routing information in the migration process is updated after the migration.

## Description

This application claims priority to Chinese Patent Application No. 200910037581.5, filed with the Chinese Patent Office on March 4, 2009 and entitled "Method, Apparatus and System for Migrating VPN Routing and Forwarding Instances", which is hereby incorporated by reference in its entirety.

### FIELD OF THE INVENTION

The present invention relates to route management in the communication field, and in particular, to a method, an apparatus, and a system for migrating VPN Routing and Forwarding (VRF) instances.

### BACKGROUND OF THE INVENTION

Routers are key devices for connecting networks. As an interconnection hub between different networks, a router system constitutes a skeleton of the worldwide network that is based on Transfer Control Protocol (TCP)/Internet Protocol (IP), and is a framework of the Internet. The history and the trend of the router system are a miniature of the Internet research.

Data networks have now evolved to IP packet networks. The development of the IP network bearing services makes the IP network evolve from a traditional data communication network to a carrier-class IP network. The carrier-class IP network is a telecom network characterized by high reliability, high security, manageability, operability, and quality of service assurance. The evolution from the traditional IP network to the carrier-class IP network is represented by key node devices in the network - high-end routers, and this imposes higher requirements on the existing high-end routers.

Currently, the market imposes higher and higher requirements on the performance of the Virtual Private Network (VPN) of high-end routers, primarily on the number of VRF tables (it is proposed to support 16K VRF on the market now) and the number of private network routes. Masses of VRF instances and private network routes are challenges for routers. The challenges are:
1. Memory consumption: With increase of the number of routes in a single VRF instance, the total number of routes of the whole private network gets quite huge, which imposes high requirements on the memory of a system.
2. CPU processing speed: Plenty of VRF instances are configured in the system. The processing of the private network routes of these VRF instances needs plenty of resources of the CPU, and this causes high consumption of the CPU in the system.

The main solution to such challenges is to add more CPUs and increase memory, so as to remove limitations on of the memory and CPU of a single main control board; or implement distributed layout of the VRF instances on software, so as to relieve the consumption of the memory and CPU on a single main control board.

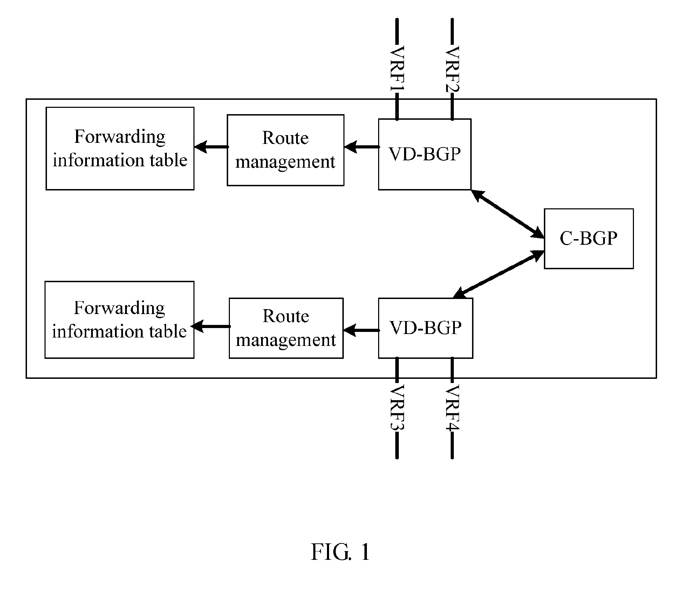

A VRF distribution refers to distributing plenty of VRF instances and private network routes to different boards or processes to improve overall performance extensibility of the system. As shown in FIG. 1, which is an overall schematic structural diagram of a VRF-based Distributed BGP, several VRF instances may be deployed into one VRF-based Distributed BGP (VD-BGP), and several VD-BGPs may be deployed in a system. The private network routes and VRF instances are extended by distributing multiple VRF instances in a private network to different VD-BGPs. The main functions of a VD-BGP (VRF-based Distributed BGP) are:
(1) maintain configuration of all VRF instances of a process;
(2) maintain VRF cross relations (local cross, remote cross, and all VRF Import Routing Target (IRT) relations of a process);
(3) unpack VPNv4 messages, receive a globally optimal route (VPNv4 message) sent by a Central BGP (CBGP), and cross the globally best route to all VRF instances involved in the cross relation, and apply the VRF ingress policies;
(4) according to a relevant changing procedure of an RT, implement a translation function of messages ("update" is translated into "withdraw");
(5) learn routes from VRF peers, and apply peer ingress policies;
(6) apply VRF egress policies to the best route of this VRF instance, and translate the best route into a VPNv4 format and send the best route to the CBGP;
(7) generate, by using the optimal routes of this VRF instance, forwarding table entries, which are used to direct forwarding; and
(8) apply peer egress policies to the best route of this VRF instance, and distribute the best route to peers.

The VD-BGP is mainly responsible for receiving, sending and cross processing routes, and selecting routes in a VRF instance. The VD-BGP sends only the optimal route of the VRF instance to the CBGP. In this way, the CBGP only stores route information about routes that may be the optimal routes and the CBGP occupies less memory; meanwhile, the VD-BGP performs ingress policy filtering and egress policy filtering for the VRF instance and peers, so that the CPU occupation of the CBGP is further reduced.

The main functions of the CBGP are:
(1) receive the optimal route of a VRF instance, and select the globally optimal route based on RD;
(2) maintain cross relations of all VD-BGPs;
(3) receive VPNv4 routes of a public network; and
(4) receive VPNv4 routes distributed by each VD-BGP.

In terms of function, the CBGP implements all basic functions of the BGP, including ingress policies and egress policies of the VRF instance, and ingress policies and egress policies of peers (peers of the BGP may still be configured on the CBGP normally).

Because the system load is related to a running state of the system, for example, the number of routes, oscillation, and policies. Therefore, load may be unbalanced between some VD-BGPs. Under this circumstance, a certain VRF instance needs to be migrated from one BGP process to another. In addition, with the development of the service, if a BGP process is not competent for bearing VRF instances in the BGP, some VRF instances in the BGP process need to be migrated to other BGP processes to relieve the load of this BGP process.

In the process of implementing the present invention, the inventor finds that the VRF migration in the prior art is to disconnect all BGP peer sessions in the VRF instance first, use a Graceful Restart (GR) technique to prevent service disconnection, and then migrate corresponding configurations to other BGP processes dynamically. The prior art is defective in: vulnerability to session disconnection; long time for reestablishing the connection and the data synchronization; incapability of responding to network topology change in time; huge impact on the network; meanwhile, the local device and the peer device are required to support the GR capability, and high requirements are imposed on the devices.

### SUMMARY OF THE INVENTION

To solve the technique problems, the embodiments of the present invention provide a method, an apparatus and a system for migrating VRF instances. In the process of migrating VRF instances, all BGP peers are migrated between BGP processes dynamically without being disconnected or affecting service operation. The local device needs only to process a BGP protocol correspondingly, and the impact on other modules and other devices is avoided. The technical solution under the present invention is based on a simple principle and is easy to be implemented.

A method for migrating VRF instances provided in an aspect of an embodiment of the present invention includes:
migrating, by a first BGP process, a VRF instance and configuration information of BGP peers in the VRF instance to a second BGP process;
instructing a TCP to back up a TCP link to the second BGP process in a hot backup mode, where the TCP link is related to peer sessions of the BGP peers in the VRF instance; and
notifying routes in a BGP Adjacent Ingress Routing Information Base (Adj-RIB-IN) to the second BGP process, where the BGP Adj-RIB-IN is corresponding to the BGP peers in the VRF instance.

A method for migrating VRF instances provided in another embodiment of the present invention includes:
receiving, by a second BGP process, a VRF instance and configuration information of BGP peers in the VRF instance migrated from a first BGP process;
creating a virtual VRF instance and virtual BGP peers in the virtual VRF instance for storing the VRF instance and configuration information of the BGP peers in the VRF instance migrated from the first BGP process;
receiving a TCP link that is backed up by a TCP in a hot backup mode and related to peer sessions of the BGP peers in the VRF instance; and
receiving, by the second BGP process, routes in an Adj-RIB-IN sent by the first BGP process, where the Adj-RIB-IN is corresponding to the BGP peers in the VRF instance.

Correspondingly, an apparatus for migrating VRF instances provided in an embodiment of the present invention includes:
a migrating module, a first BGP process migrates a VRF instance and configuration information of BGP peers in the VRF instance to a second BGP process;
a backup module, the BGP process instructs a TCP to back up a TCP link to the second BGP process, where the TCP link is related to peer sessions of the BGP peers in the VRF instance; and
a notifying module, the first BGP process notifies routes in a BGP Adj-RIB-IN to the second BGP process, where the BGP Adj-RIB-IN is corresponding to the BGP peers in the VRF instance.

An apparatus for migrating VRF instances provided in another aspect of an embodiment of the present invention includes:
a storing module, a second BGP process receives a VRF instance and configuration information of BGP peers in the VRF instance migrated from a first BGP process;
a creating module, the second BGP process creates a virtual VRF instance and virtual BGP peers in the virtual VRF instance for storing the VRF instance and configuration information of the BGP peers in the VRF instance migrated from the first BGP process; and receive a TCP link that is backed up by a TCP and related to peer sessions of the BGP peers in the VRF instance; and
a receiving module, the second BGP process receives routes in an Adj-RIB-IN sent by the first BGP process, where the Adj-RIB-IN is corresponding to the BGP peers in the VRF instance.

Correspondingly, a system for migrating VRF instances provided in an embodiment of the present invention includes:
a first BGP process unit, configured to: send a VRF instance and configuration information of BGP peers in the VRF instance to a second BGP process unit; instruct a TCP unit to back up a TCP link to the second BGP process unit in a hot backup mode, where the TCP link is related to peer sessions of the BGP peers in the VRF instance; and notify routes in a BGP Adj-RIB-IN to the second BGP process unit, where the BGP Adj-RIB-IN is corresponding to the BGP peers in the VRF instance; and
the second BGP process unit, configured to: receive a VRF instance and configuration information of BGP peers in the VRF instance migrated from the first BGP process unit; create a virtual VRF instance and virtual BGP peers in the virtual VRF instance; store the VRF instance and configuration information of the BGP peers in the VRF instance migrated from the first BGP process unit into the virtual VRF instance and the virtual BGP peers in the virtual VRF instance; receive a TCP link that is backed up by a TCP unit in a hot backup mode and related to peer sessions of the BGP peers in the VRF instance; and receive routes in an Adj-RIB-IN sent by the first BGP process unit, where the Adj-RIB-IN is corresponding to the BGP peers in the VRF instance.

In the embodiments of the present invention, while VRF instances are migrated dynamically between BGP processes, a source BGP process of the migrated VRF instance retains VRF configuration information; a TCP link is backed up to a destination BGP process in a hot backup mode and the receiving of TCP messages is not stopped immediately; after the destination BGP process receives the complete routing information of the VRF instance and begins to receive and process the TCP messages, the destination BGP process instructs the source BGP process to delete the VRF configuration information and TCP link, without interrupting any BGP peer service of the VRF instance or disconnecting the session; the VRF migration process of a local router is completely unperceivable by a peer device, and route change information is updated after the migration; the local device needs only to process a BGP protocol correspondingly, and the impact on other modules and other devices is avoided. The principle is simple and is easy to be implemented.

### BRIEF DESCRIPTION OF THE DRAWINGS

FIG. 1 is a flowchart of VD-BGP in the prior art;
FIG. 2 is a flowchart of a method for migrating VRF instances according to an embodiment of the present invention;
FIG. 3 is a more detailed flowchart of a method for migrating VRF instances according to an embodiment of the present invention;
FIG. 4 is a flowchart of a method for migrating VRF instances according to an embodiment of the present invention;
FIG. 5 is a more detailed flowchart of a method for migrating VRF instances according to an embodiment of the present invention;
FIG. 6 is a first preferred embodiment of a method for migrating VRF instances according to an embodiment of the present invention;
FIG 7 is a second preferred embodiment of a method for migrating VRF instances according to an embodiment of the present invention;
FIG 8 is a third preferred embodiment of a method for migrating VRF instances according to an embodiment of the present invention;
FIG. 9 is a schematic diagram showing an apparatus for migrating VRF instances according to an embodiment of the present invention;
FIG. 10 is a schematic diagram showing an apparatus for migrating VRF instances according to an embodiment of the present invention; and
FIG. 11 is a block diagram showing a system for migrating VRF instances according to an embodiment of the present invention.

### DETAILED DESCRIPTION OF THE EMBODIMENTS

To make the technical solution, objectives and merits of the present invention clearer, the following describes the embodiments of the present invention in more detail with reference to accompanying drawings.

In this embodiment and the following embodiments, an Adj-RIB-IN is: a BGP generates a peer tree for each VRF, and generates an Adj-RIB-IN for each peer for storing routing information received from this peer, where the routing information may be sent without involving route selection.

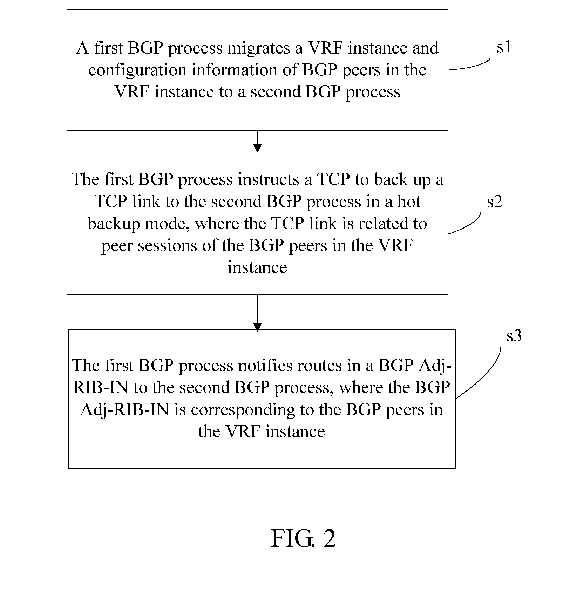

FIG. 2 is a flowchart of a method for migrating VRF instances according to an embodiment of the present invention. As shown in FIG. 2, a method for migrating VRF instances includes:
S1. A first BGP process migrates a VRF instance and configuration information of BGP peers in the VRF instance to a second BGP process.
S2. The first BGP process instructs a TCP to back up a TCP link to the second BGP process (for example, in a hot backup mode), where the TCP link is related to peer sessions of the BGP peers in the VRF instance.
S3. The first BGP process notifies routes in a BGP Adj-RIB-IN to the second BGP process, where the BGP Adj-RIB-IN is corresponding to the BGP peers in the VRF instance.

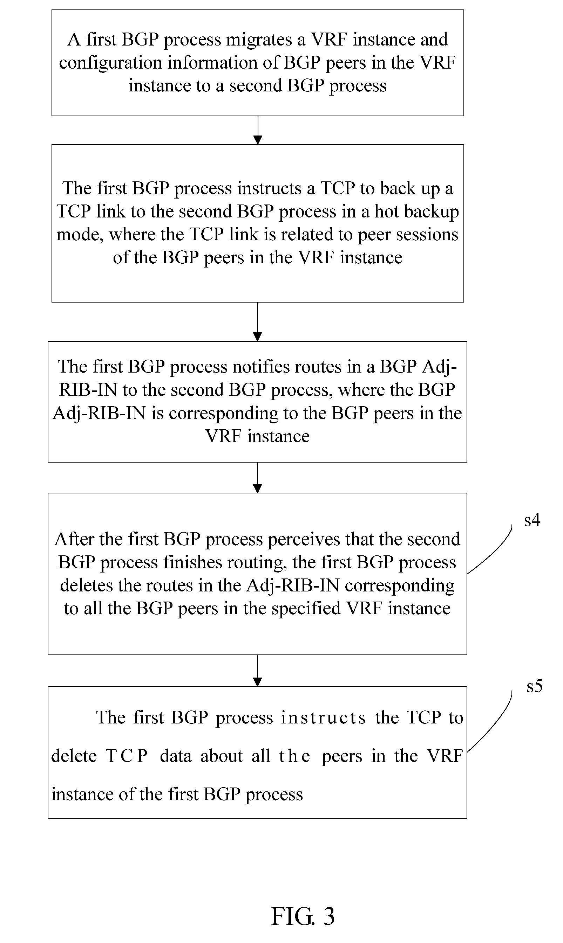

FIG. 3 is a more detailed flowchart of a method for migrating VRF instances according to an embodiment of the present invention. As shown in FIG. 3, besides the steps shown in FIG. 2, a method for migrating VRF instances further includes:
S4. After perceiving that the second BGP process finishes routing, the first BGP process deletes the routes in the Adj-RIB-IN corresponding to all BGP peers in the specified VRF instance.
S5. The first BGP process instructs the TCP to delete TCP data about the peers in the VRF instance of the first BGP process.

The preceding specifically describes a processing procedure of a BGP process of migrating VRF instances. The following describes a BGP process of receiving the VRF instances.

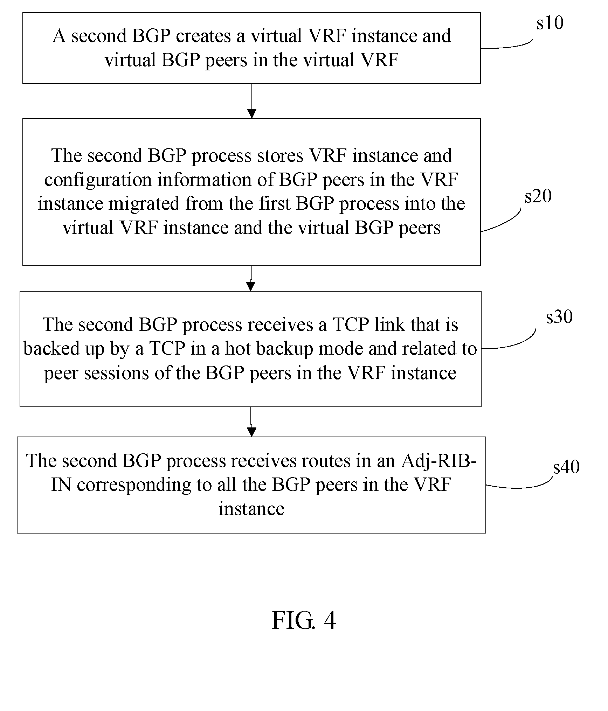

As shown in FIG. 4, a method for migrating VRF instances according to an embodiment of the present invention includes:
S10. A second BGP creates a virtual VRF instance and virtual BGP peers in the virtual VRF.
S20. The second BGP process stores VRF instance and configuration information of BGP peers in the VRF instance migrated from a first BGP process into the virtual VRF instance and the virtual BGP peers.
S30. The second BGP process receives a TCP link that is backed up by a TCP to the second BGP process and related to peer sessions of the BGP peers in the VRF instance.
S40. The second BGP process receives routes in an Adj-RIB-IN corresponding to all BGP peers in the VRF instance.

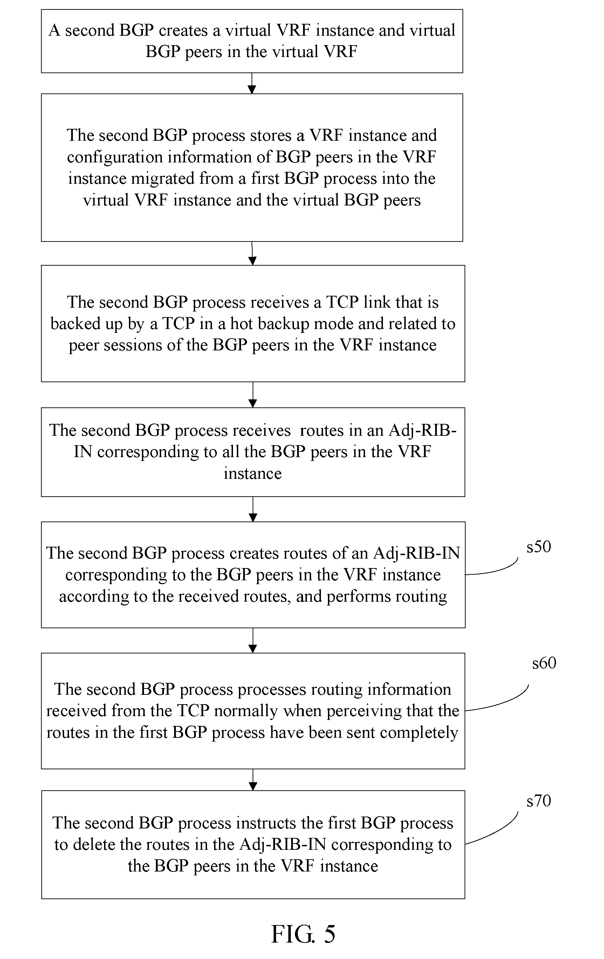

FIG. 5 is a more detailed flowchart of a method for migrating VRF instances according to an embodiment of the present invention. As shown in FIG. 5, besides the steps shown in FIG. 4, a method for migrating VRF instances further includes:
S50. The second BGP process creates routes of an Adj-RIB-IN corresponding to the BGP peers in the VRF instance according to the received routes, and performs routing.
S60. The second BGP process processes routing information received from the TCP according to the prior art after perceiving that the routes in the Adj-RIB-IN corresponding to the BGP peers in the VRF instance in the first BGP process have been sent completely.
S70. The second BGP process instructs the first BGP process to delete the routes in the Adj-RIB-IN corresponding to the BGP peers in the VRF instance.

It can be seen from the preceding embodiments, in the dynamic migration process of the VRF instance between the BGP processes, all BGP peer services of the VRF instance are not interrupted and the sessions are not disconnected; the VRF migration process of a local router is not perceivable by a peer device, and changed routing information is updated after the migration; only BGP protocol of the local device is involved, and the impact on other modules and other devices is avoided; the principle is simple and is easy to be implemented; and the whole migration process ensures that services are not interrupted, so that the system performance and quality of service are improved.

To make the technical solution under the present invention understandable for those skilled in the art, the following puts forward three preferred embodiments to expound a method for migrating VRF instances according to an embodiment of the present.

Preferred embodiment 1: VRF instances are migrated dynamically between different VD-BGPs.

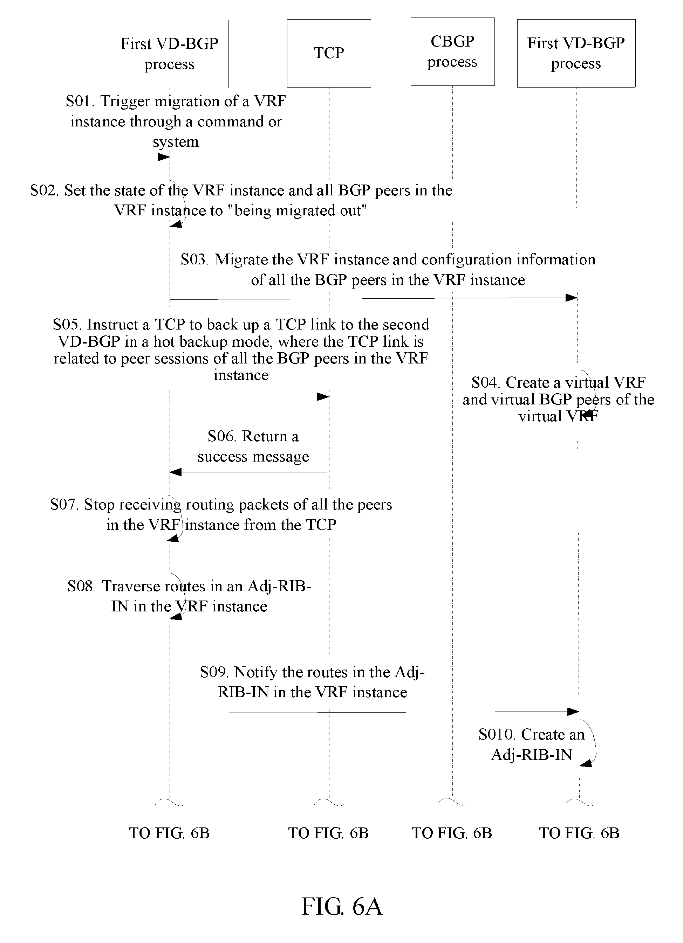

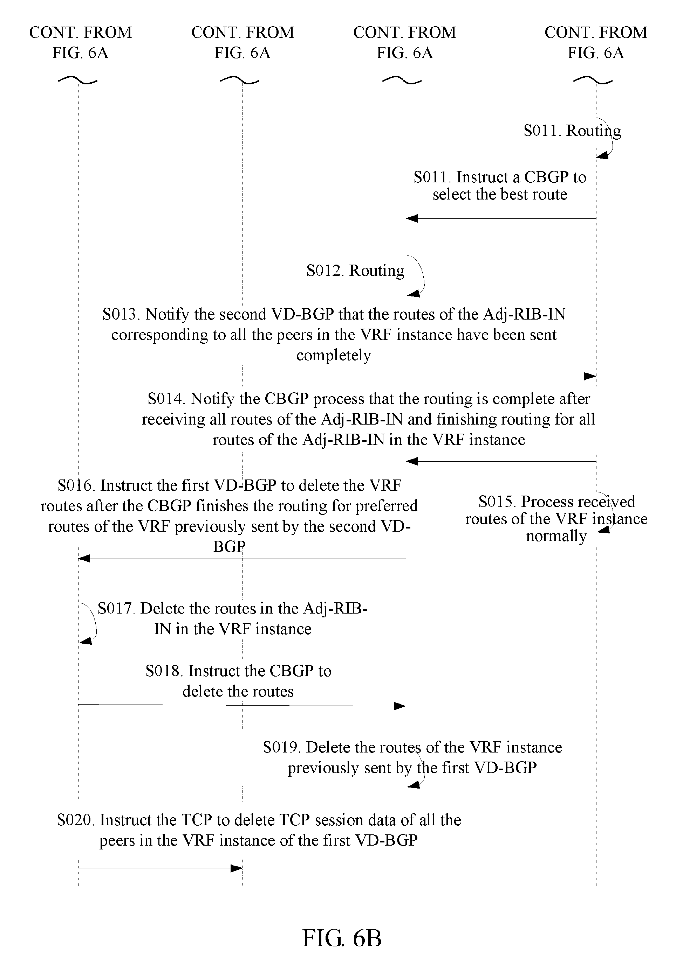

In this embodiment, the first BGP process is a first VD-BGP process; the second BGP process is a second VD-BGP process. As shown in FIG. 6, the method for migrating VRF instances includes:
S01. A VRF dynamic migration command is executed to migrate a VRF instance of a BGP and configuration information of BGP peers in the VRF instance from the first VD-BGP process to the second VD-BGP process; or the system detects that the first VD-BGP process is overloaded, and migrates the VRF instance from the first VD-BGP process to the VD-BGP process automatically.

A command line of the VRF dynamic migration command is:
shift vpn-instance vpn-instance-name distributed-index number.

In the command line, "vpn-instance-name" is the name of a vpn-instance to be migrated; and " number" is the distribution index number of a destination BGP process (the second VD-BGP process in this embodiment) that receives the migrated VRF instance.
S02. The state of the VRF instance and all BGP peers in the VRF instance in the first VD-BGP process is set to "being migrated out".
S03. The first VD-BGP process sends the VRF instance, the configuration information of all BGP peers in the VRF instance, and other data to the second VD-BGP process.
S04. A virtual VRF instance and all virtual BGP peers in the virtual VRF instance are created in the second VD-BGP process for storing the VRF instance and the configuration information of all the BGP peers in the VRF instance migrated from the first VD-BGP process, and other data such as unprocessed messages.
S05. The first VD-BGP process instructs a TCP to back up a TCP link to the second VD-BGP process in a hot backup mode, where the TCP link is related to peer sessions of all the BGP peers in the VRF instance.
S06. The TCP returns a success message to the first VD-BGP process after backing up the TCP link to the second VD-BGP process in a hot backup mode, where the TCP link is related to the peer sessions of all the BGP peers in the VRF instance.
S07. After receiving the success message sent by the TCP, the first VD-BGP process stops receiving routing messages of all the peers in the VRF instance from the TCP
S08. The first VD-BGP process traverses routes in an Adj-RIB-IN of all the peers of the VRF instance, and sends the traversed routes in the Adj-RIB-IN of all the peers of the VRF instance to the second VD-BGP process.
S09. The second VD-BGP process creates a corresponding Adj-RIB-IN after receiving the routes.
S010. The second VD-BGP process begins routing.
S011-S012. The second VD-BGP process notifies the optimal route to a CBGP. A CBGP process begins routing after receiving the optimal route notified by the second VD-BGP process.

It should be noted that, the CBGP process simultaneously receives the optimal routes selected and sent by the first VD-BGP process and the second VD-BGP process respectively and related to the same VRF instance. The CBGP process may differentiate between the route sent by the first VD-BGP process and the route sent by the second VD-BGP process according to process identifiers, or by labeling the routes.
S013. The first VD-BGP process notifies the second VD-BGP process that the routes of the Adj-RIB-IN corresponding to all the BGP peers in the VRF instance have been sent completely.
S014. The second VD-BGP process notifies the CBGP process that the routing is ended after receiving all routes of the Adj-RIB-IN and finishing the routing for all routes of the Adj-RIB-IN in the VRF instance.
S015. The second VD-BGP process begins to process the received VRF routes normally.
S016-S017. After finishing routing for preferred routes of the VRF sent by the second VD-BGP process, the CBGP process notifies the first VD-BGP process. The first VD-BGP process begins to delete the routes.
5018. The first VD-BGP process instructs the CBGP process to delete the routes.
S019. The CBGP process begins to delete the routes of the VRF instance previously sent by the first VD-BGP process.
S020. The first VD-BGP process instructs the TCP to delete the data about all the peers in the VRF instance of the first VD-BGP process.

Preferred embodiment 2: VRF instances are migrated dynamically from a VD-BGP process to a CBGP process.

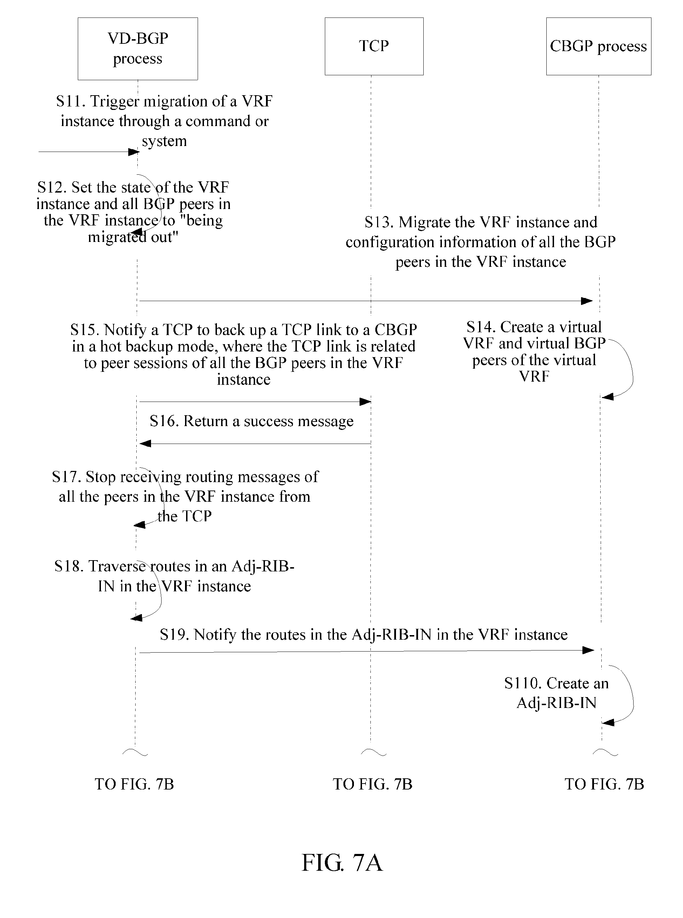

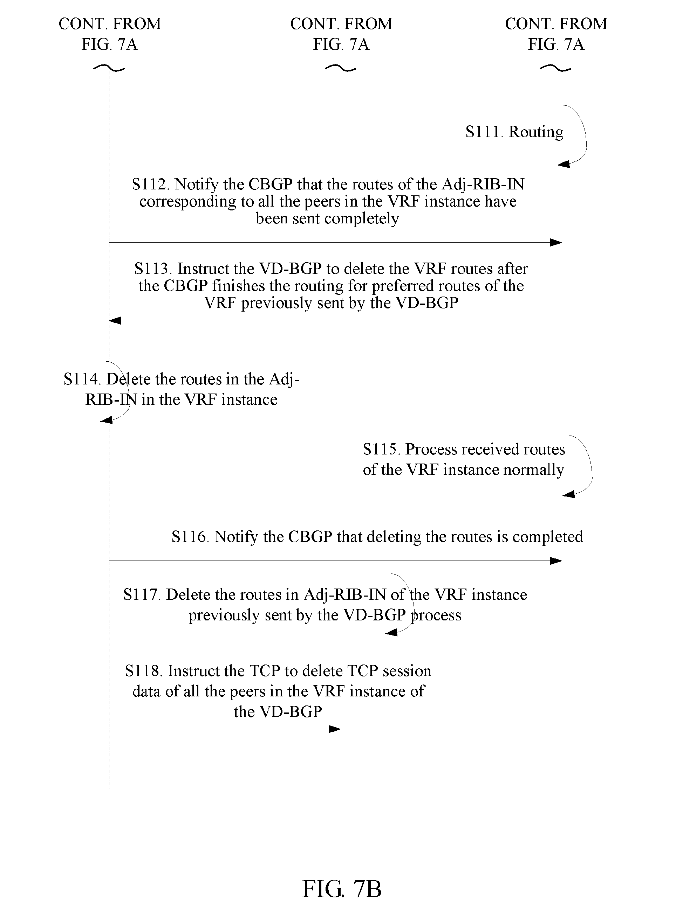

In this embodiment, the first BGP process is a VD-BGP process; the second BGP process is a CBGP process. As shown in FIG. 7, the method for migrating VRF instances includes:
S11. A VRF dynamic migration command is executed to migrate a VRF instance of a BGP process and configuration information of BGP peers in the VRF instance from the VD-BGP process to the CBGP process; or the system detects that the VD-BGP process is overloaded, and migrates the VRF instance from the VD-BGP process to the CBGP process automatically.

A command line of the VRF dynamic migration is:
shift vpn-instance vpn-instance-name distributed-index number.

In the command line, "vpn-instance-name" is the name of a vpn-instance to be migrated; and
" number" is the distribution index number of a destination BGP process (the CBGP process in this embodiment) that receives the migrated VRF instance.
S12. The state of the VRF instance and all BGP peers in the VRF instance in the VD-BGP process is set to "being migrated out".
S13. The VD-BGP process sends the VRF instance, the configuration information of all BGP peers in the VRF instance, and other data to the CBGP process.
S14. A virtual VRF instance and all virtual BGP peers in the virtual VRF instance are created in the CBGP process, and are used for storing the VRF instance and the configuration information of all the peers in the VRF instance migrated from the VD-BGP process, and other data such as unprocessed messages.
S 15. The VD-BGP process instructs a TCP to back up a TCP link to the CBGP process in a hot backup mode, where the TCP link is related to peer sessions of all the BGP peers in the VRF instance.
S16. The TCP returns a success message to the VD-BGP process after backing up the TCP link to the CBGP process in a hot backup mode, where the TCP link is related to the peer sessions of all the BGP peers in the VRF instance.
S17. After receiving the success message sent by the TCP, the VD-BGP process stops receiving routing messages of all the peers in the VRF instance from the TCP.
S18. The VD-BGP process traverses routes in an Adj-RIB-IN corresponding to all the peers in the VRF instance.
S19. The VD-BGP process sends the traversed routes in the Adj-RIB-IN corresponding to all the peers in the VRF instance to the CBGP process.
S 110. The CBGP process creates a corresponding Adj-RIB-IN after receiving the routes.
S111. The CBGP process begins routing.
S112. The VD-BGP process notifies the CBGP process that the routes of the Adj-RIB-IN corresponding to all the peers in the VRF instance have been sent completely.
S113-S114. After preferred routes of the VRF have been sent completely by the VD-BGP, the CBGP process instructs the VD-BGP process to begin to delete the routes.
S115. The CBGP process begins to process the received routes of the VRF instance normally. S 116. The VD-BGP process instructs the CBGP process to delete the routes.
S117. The CBGP process begins to delete the routes previously sent by the VD-BGP process.
S118. The VD-BGP process instructs the TCP to delete the data about all the peers in the VRF instance of the VD-BGP process.

Preferred embodiment 3: VRF instances are migrated dynamically from a CBGP process to a VD-BGP process.

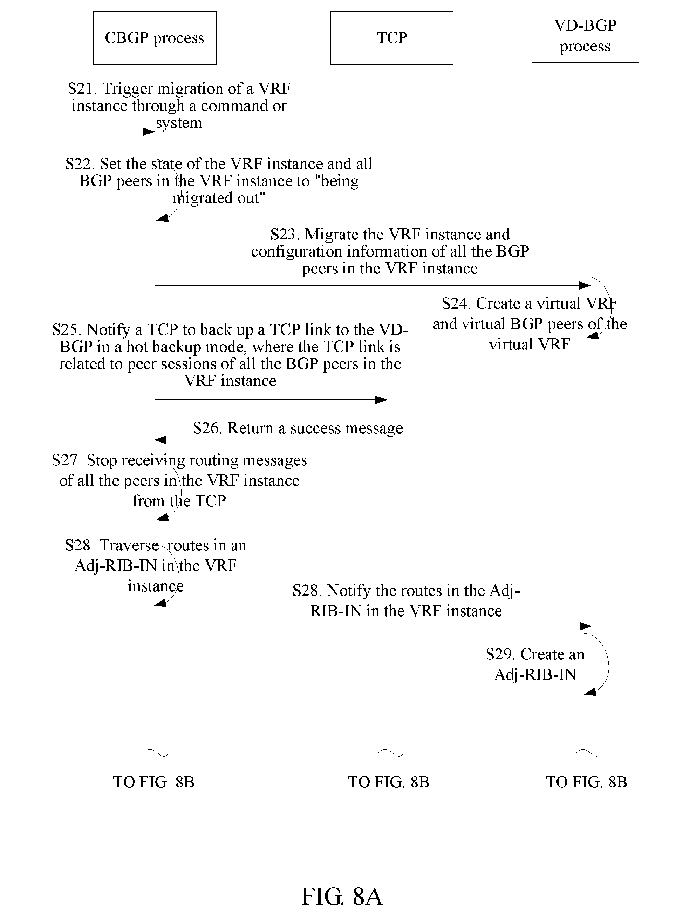

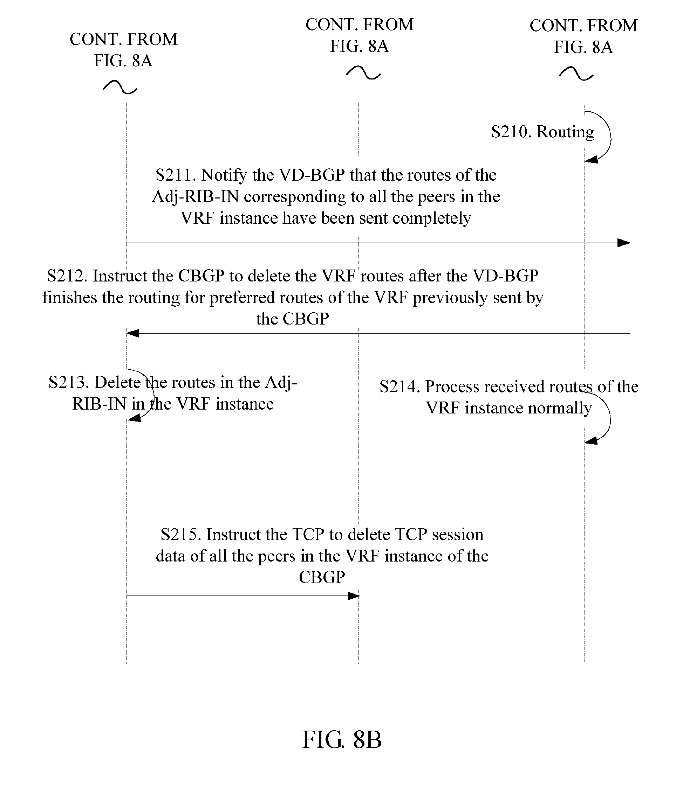

In this embodiment, the first BGP process is a CBGP process; the second BGP process is a VD-BGP process. As shown in FIG. 8, the method for migrating VRF instances includes:
S21. A VRF dynamic migration command is executed to migrate a VRF instance of a BGP process and configuration information of BGP peers in the VRF instance from the CBGP process to the VD-BGP process; or the system detects that the CBGP process is overloaded, and migrates the VRF instance from the CBGP process to the VD-BGP process automatically.

A command line of the VRF dynamic migration is:
shift vpn-instance vpn-instance-name distributed-index number.

In the command line, "vpn-instance-name" is the name of a vpn-instance to be migrated; and " number" is the distribution index number of a destination BGP process (the VD-BGP process in this embodiment) that receives the migrated VRF instance.
S22. The state of the VRF instance and all the BGP peers in the VRF instance in the CBGP process is set to "being migrated out".
S23. The CBGP process sends the VRF instance, the configuration information of all the BGP peers in the VRF instance, and other data to the VD-BGP process.
S24. A virtual VRF instance and all virtual BGP peers in the virtual VRF instance are created in the VD-BGP process, and are used for storing the VRF instance and the configuration information of all the BGP peers in the VRF instance migrated from the CBGP process, and other data such as unprocessed messages.
S25. The CBGP process instructs a TCP to back up a TCP link to the VD-BGP process in a hot backup mode, where the TCP link is related to peer sessions of all the BGP peers in the VRF instance.
S26. The TCP returns a success message to the CBGP process after backing up the TCP link to the VD-BGP process in a hot backup mode, where the TCP link is related to the peer sessions of all the BGP peers in the VRF instance.
S27. After receiving the success message sent by the TCP, the CBGP stops receiving routing messages of all the peers in the VRF instance from the TCP.
S28. The CBGP process traverses routes in an Adj-RIB-IN of all the peers of the VRF instance, and sends the traversed routes in the Adj-RIB-IN of all the peers of the VRF instance to the VD-BGP process.
S29. The VD-BGP process creates a corresponding Adj-RIB-IN after receiving the routes.
S210. The VD-BGP process begins routing.
S211. The CBGP process notifies the VD-BGP process that the routes of the Adj-RIB-IN corresponding to all the peers in the VRF instance have been sent completely.
S212-S213. After preferred routes of the VRF have been sent completely by the CBGP process, the VD-BGP process notifies the CBGP process to begin to delete the routes.
S214. The VD-BGP process begins to process the received routes of the VRF instance normally.
S215. The CBGP process instructs the TCP to delete the data about all the peers in the VRF instance of the CBGP process.

It can be known form the preceding embodiment, in this embodiment, in the dynamic migration between the BGP processes of the VRF instance, all BGP peer services of the VRF instance are not interrupted and the sessions are not disconnected; the VRF migration process of a local router is not perceivable completely by a peer device, and changed routing information is updated after the migration; the local device needs only to process a BGP protocol correspondingly, and the impact on other modules and other devices is masked off; the principle is simple and is easy to be implemented; and the whole migration process ensures that services are not interrupted, so that the system performance and quality of service are improved.

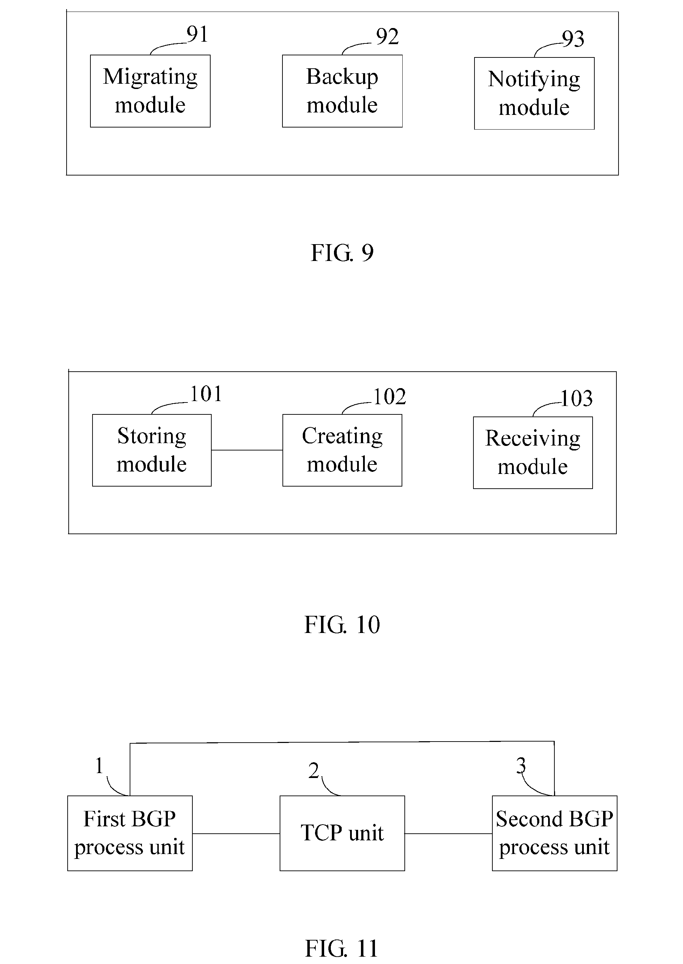

Based on the preceding VRF migration method, an apparatus for migrating VRF instances is provided in an embodiment of the present invention. As shown in FIG. 9, the apparatus includes:
a migrating module 91, configured to migrate a VRF instance and configuration information of BGP peers in the VRF instance to a second BGP process;
a backup module 92, configured to instruct a TCP to back up a TCP link to the second BGP process, where the TCP link is related to peer sessions of the BGP peers in the VRF instance; and
a notifying module 93, configured to notify routes in a BGP Adj-RIB-IN to the second BGP process, where the BGP Adj-RIB-IN is corresponding to the BGP peers in the VRF instance.

Correspondingly, an apparatus for migrating VRF instances is provided in another embodiment of the present invention. As shown in FIG 10, the apparatus includes:
a storing module 102, a second BGP process receives a VRF instance and configuration information of BGP peers in the VRF instance migrated from a first BGP process;
a creating module 102, the second BGP process creates a virtual VRF instance and virtual BGP peers in the virtual VRF instance for storing the VRF instance and configuration information of the BGP peers in the VRF instance migrated from the first BGP process; and receive a TCP link that is backed up by a TCP and related to peer sessions of the BGP peers in the VRF instance; and
a receiving module 103, the second BGP process receives routes in an Adj-RIB-IN sent by the first BGP process, where the Adj-RIB-IN is corresponding to the BGP peers in the VRF instance.

In the process of migrating VRF instances in this embodiment, all BGP peers are migrated between BGP processes dynamically without being disconnected or affecting service operation. The local device needs only to process a BGP protocol correspondingly, and the impact on other modules and other devices is masked off. The principle is simple and is easy to be implemented.

Correspondingly, based on the preceding VRF migration method and apparatus, functions of a system for migrating VRF instances need to be enhanced creatively. As shown in FIG 11, the system for migrating VRF instances includes:
a first BGP process unit 1, configured to: send a VRF instance and configuration information of BGP peers in the VRF instance to a second BGP process unit 3; instruct a TCP unit 2 to back up a TCP link to the second BGP process unit 3 in a hot backup mode, where the TCP link is related to peer sessions of the BGP peers in the VRF instance; and notify routes in a BGP Adj-RIB-IN to the second BGP process unit 3, where the BGP Adj-RIB-IN is corresponding to the BGP peers in the VRF instance;
the second BGP process unit 3, configured to: create a virtual VRF instance and virtual BGP peers in the virtual VRF instance; store the VRF instance and configuration information of the BGP peers in the VRF instance migrated from the first BGP process unit 1 into the virtual VRF instance and the virtual BGP peers in the virtual VRF instance; receive a TCP link that is backed up by the TCP unit 2 to the second BGP process unit 3 in a hot backup mode and related to peer sessions of the BGP peers in the VRF instance; and receive routes in an Adj-RIB-IN corresponding to the BGP peers in the VRF instance; and
the TCP unit 2, configured to receive a notification sent by the first BGP process unit 1, and back up a TCP link to the second BGP process unit 3 in a hot backup mode according to the notification, where the TCP link is related to the peer sessions of the BGP peers in the VRF instance.

The first BGP process unit 1 is further configured to: delete routes in an Adj-RIB-IN corresponding to all the BGP peers in the specified VRF instance after the first BGP process unit 1 perceives that the second BGP process unit 3 finishes routing; and instruct the TCP unit 2 to delete TCP data about all the peers in the VRF instance of the first BGP process unit 1.

The second BGP process unit 3 is further configured to: create routes in an Adj-RIB-IN corresponding to the BGP peers in the VRF instance according to the received routes, and perform routing; process routing information received from the TCP unit 2 normally when perceiving that all the routes in the Adj-RIB-IN corresponding to the BGP peers in the VRF instance in the first BGP process unit 1 have been sent completely; and instruct the first BGP process unit 1 to delete the routes in the Adj-RIB-IN corresponding to the BGP peers in the VRF instance.

The TCP unit 2 is further configured to delete the TCP data about all the peers in the VRF instance of the first BGP process unit 1 when perceiving the notification from the first BGP process unit 1.

Through the description of the preceding embodiments, persons skilled in the art may clearly understand that the present invention may be implemented through software in addition to a necessary universal hardware platform, or may be implemented through only hardware. Based on this understanding, all or part of the contributions the technique solutions under the present invention make to the background technology may be embodied in a software product. The software product may be stored in storage media such as an ROM/RAM, a magnetic disk, or a CD-ROM, and incorporates several instructions for instructing a computer device (may be a personal computer, a server, or a network device) to execute the method specified in any embodiment of the present invention or a part of the embodiment.

In the embodiments of the present invention, while VRF instances are migrated dynamically between BGP processes, a source BGP process of the migrated VRF instance retains VRF configuration information; a TCP link is backed up to a destination BGP process in a hot backup mode and the receiving TCP messages is not stopped immediately; after the destination BGP process receives routing information of the VRF instance completely and begins to receive and process the TCP messages, the destination BGP process instructs the source BGP process to delete the VRF configuration information and the TCP link, without interrupting any BGP peer services of the VRF instance or disconnecting the session; the VRF migration process of a local router is completely unperceivable by a peer device, and route change information in the migration process is updated after the migration; the local device needs only to process a BGP protocol correspondingly, and the impact on other modules and other devices is masked off; the principle is simple and is easy to be implemented. The whole migration process ensures that services are not interrupted, so that the system performance and quality of service is improved.

The preceding descriptions are merely exemplary embodiments of the present invention, but are not intended to limit the scope of the present invention. Therefore, any equivalent replacement derived from the present invention shall fall within the protection scope of the present invention.

## Claims

1. A method for migrating Virtual Private Network Routing and Forwarding (VRF) instances, comprising:
migrating, by a first Border Gateway Protocol (BGP) process, a VRF instance and configuration information of BGP peers in the VRF instance to a second BGP process;
instructing a Transport Control Protocol (TCP) to back up a TCP link to the second BGP process, wherein the TCP link is related to peer sessions of the BGP peers in the VRF instance; and
notifying, by the first BGP process, routes in a BGP Adjacent Ingress Routing Information Base (Adj-RIB-IN) to the second BGP process, wherein the BGP Adj-RIB-IN is corresponding to the BGP peers in the VRF instance.

2. The method according to claim 1, further comprising:
stopping, by the first BGP process, receiving routing messages about the BGP peers in the VRF instance from a TCP after the first BGP process learns that the TCP links related to the peer sessions of all the BGP peers in the VRF instance are backed up by the TCP to the second BGP process.

3. The method according to claim 1 or 2, wherein:
the notifying routes in a BGP Adj-RIB-IN to the second BGP process comprises:
traversing, by the first BGP process, the BGP Adj-RIB-IN corresponding to the BGP peers in the VRF instance; and
sending, by the first BGP process, routes obtained by traversing to the second BGP process.

4. The method according to claim 3, wherein:
after sending the routes obtained by traversing to the second BGP process, the method further comprises:
notifying, by the first BGP process, the second BGP process that the routes in the BGP Adj-RIB-IN corresponding to the BGP peers in the VRF instance have been sent completely; and
deleting, by the first BGP process, the routes in the BGP Adj-RIB-IN corresponding to the BGP peers in the VRF instance after perceiving that the second BGP process finishes routing.

5. The method according to claim 4, wherein:
after deleting the routes in the BGP Adj-RIB-IN corresponding to the BGP peers in the VRF instance, the method further comprises:
notifying, by the first BGP process, the TCP to delete TCP session data related to the BGP peers in the VRF instance in the first BGP process; and
instructing, by the first BGP process, a Central BGP (CBGP) to delete the routes in the BGP Adj-RIB-IN corresponding to the BGP peers in the VRF instance.

6. A method for migrating Virtual Private Network Routing and Forwarding (VRF) instances, comprising:
receiving, by a second Border Gateway Protocol (BGP) process, a VRF instance and configuration information of BGP peers in the VRF instance migrated from a first BGP process;
creating, by the second BGP process, a virtual VRF instance and virtual BGP peers in the virtual VRF instance for storing the VRF instance and configuration information of the BGP peers in the VRF instance migrated from the first BGP process;
receiving a Transport Control Protocol (TCP) link that is backed up by a TCP and related to peer sessions of the BGP peers in the VRF instance; and
receiving, by the second BGP process, routes in an Adjacent Ingress Routing Information Base (Adj-RIB-IN) sent by the first BGP process, wherein the Adj-RIB-IN is corresponding to the BGP peers in the VRF instance.

7. The method according to claim 6, wherein:
after the second BGP process receives the routes in the BGP Adj-RIB-IN corresponding to the BGP peers in the VRF instance, the method further comprises:
creating, by the second BGP process, a Routing Information Base (RIB) for storing the routes in the BGP Adj-RIB-IN corresponding to the BGP peers in the VRF instance, and performing routing according to the routes.

8. The method according to claim 7, wherein:
after the second BGP process creates the RIB for storing the routes in the BGP Adj-RIB-IN corresponding to the BGP peers in the VRF instance and performing routing according to the routes, the method further comprises:
processing, by the second process, routing information received from the TCP normally after the second BGP process perceives that the routes in the BGP Adj-RIB-IN corresponding to the BGP peers in the VRF instance in the first BGP process have been sent completely.

9. The method according to claim 8, wherein:
after processing the routing information received from the TCP normally, the method further comprises:
instructing, by the second BGP process, the first BGP process to delete the routes in the BGP Adj-RIB-IN corresponding to the BGP peers in the VRF instance.

10. The method according to claim 9, wherein:
when the first BGP process is a first VRF-based Distributed BGP (VD-BGP) process and the second BGP process is a second VD-BGP process, after the second BGP process creates the RIB for storing the routes in the BGP Adj-RIB-IN corresponding to the BGP peers in the VRF instance and performing routing according to the routes, the method further comprises:
sending, by the second BGP process, the routes obtained from the routing to a Central BGP (CBGP); and
storing, by the CBGP, the optimal routes selected and sent by the second BGP process and the first BGP process respectively, wherein the optimal routes are related to the same VRF instance; storing the routes in duplicate, or labeling the routes and storing a single copy of the routes; and performing routing according to the received routes.

11. An apparatus for migrating Virtual Private Network Routing and Forwarding (VRF) instances, comprising:
a migrating module, a first BGP process migrates a VRF instance and configuration information of Border Gateway Protocol (BGP) peers in the VRF instance to a second BGP process;
a backup module, the BGP process instructs a Transport Control Protocol (TCP) to back up a TCP link to the second BGP process, wherein the TCP link is related to peer sessions of the BGP peers in the VRF instance; and
a notifying module, the first BGP process notifies routes in a BGP Adjacent Ingress Routing Information Base (Adj-RIB-IN) to the second BGP process, wherein the BGP Adj-RIB-IN is corresponding to the BGP peers in the VRF instance.

12. The apparatus according to claim 11, further comprising:
a stopping module, the first BGP process stops receiving routing messages about the BGP peers in the VRF instance from the TCP after the first BGP process learns that the TCP link related to the peer sessions of all the BGP peers in the VRF instance are backed up by the TCP in the backup module to the second BGP process.

13. The apparatus according to claim 11 or 12, wherein the notifying module comprises:
a traversing unit, the first BGP process traverses the BGP Adj-RIB-IN corresponding to the BGP peers in the VRF instance; and
a sending unit, the first BGP process sends routes obtained by the traversing unit to the second BGP process.

14. The apparatus according to claim 13, wherein the notifying module further comprises:
a notifying unit, the first BGP process notifies the second BGP process that the routes in the BGP Adj-RIB-IN corresponding to the BGP peers in the VRF instance have been sent completely; and
a deleting unit, configured to delete the routes in the BGP Adj-RIB-IN corresponding to the BGP peers in the VRF instance after the first BGP process perceives that the second BGP process finishes routing.

15. An apparatus for migrating Virtual Private Network Routing and Forwarding (VRF) instances, comprising:
a storing module, a second BGP process receives a VRF instance and configuration information of Border Gateway Protocol (BGP) peers in the VRF instance migrated from a first BGP process;
a creating module, the second BGP process creates a virtual VRF instance and virtual BGP peers in the virtual VRF instance for storing the VRF instance and configuration information of the BGP peers in the VRF instance migrated from the first BGP process; and receive a TCP link that is backed up by a Transport Control Protocol (TCP) and related to peer sessions of the BGP peers in the VRF instance; and
a receiving module, the second BGP process receives routes in an Adjacent Ingress Routing Information Base (Adj-RIB-IN) sent by the first BGP process, wherein the Adj-RIB-IN is corresponding to the BGP peers in the VRF instance.

16. The apparatus according to claim 15, further comprising:
a routing module, the second BGP process creates a Routing Information Base (RIB) for storing the routes in the BGP Adj-RIB-IN corresponding to the BGP peers in the VRF instance in the receiving module, and perform routing according to the routes; and
a processing module, configured to process routing information received from the TCP normally when the second BGP process perceives that the routes in the BGP Adj-RIB-IN corresponding to the BGP peers in the VRF instance in the first BGP process have been sent completely.

17. The apparatus according to claim 16, further comprising:
a deleting module, the second BGP process instructs the first BGP process to delete the routes in the BGP Adj-RIB-IN corresponding to the BGP peers in the VRF instance.

18. A system for migrating Virtual Private Network Routing and Forwarding (VRF) instances, comprising:
a first BGP process unit, configured to: send a VRF instance and configuration information of Border Gateway Protocol (BGP) peers in the VRF instance to a second BGP process unit; instruct a Transport Control Protocol (TCP) unit to back up a TCP link to the second BGP process unit, wherein the TCP link is related to peer sessions of the BGP peers in the VRF instance; and notify routes in a BGP Adjacent Ingress Routing Information Base (Adj-RIB-IN) to the second BGP process unit, wherein the BGP Adj-RIB-IN is corresponding to the BGP peers in the VRF instance; and
the second BGP process unit, configured to: receive VRF instance and configuration information of BGP peers in the VRF instance migrated from the first BGP process unit; create a virtual VRF instance and virtual BGP peers in the virtual VRF instance; store the VRF instance and configuration information of the BGP peers in the VRF instance migrated from the first BGP process unit into the virtual VRF instance and the virtual BGP peers in the virtual VRF instance; receive a TCP link that is backed up by the TCP unit and related to peer sessions of the BGP peers in the VRF instance; and receive routes in a BGP Adj-RIB-IN sent by the first BGP process unit, wherein the BGP Adj-RIB-IN is corresponding to the BGP peers in the VRF instance.

19. The system according to claim 18, wherein:
the first BGP process unit is further configured to: delete the routes in the BGP Adj-RIB-IN corresponding to all the BGP peers in the VRF instance after perceiving that the second BGP process unit has finished routing; and instruct the TCP unit to delete TCP session data related to the BGP peers in the VRF instance in the first BGP process unit.

20. The system according to claim 19, wherein:
the second BGP process unit is further configured to: create a Routing Information Base (RIB) for storing the routes in the BGP Adj-RIB-IN corresponding to the BGP peers in the VRF instance, and perform routing according to the routes; process routing information received from the TCP unit normally when perceiving that the routes in the Adj-RIB-IN corresponding to the BGP peers in the VRF instance in the first BGP process unit have been sent completely; and instruct the first BGP process unit to delete the routes in the Adj-RIB-IN corresponding to the BGP peers in the VRF instance.
